# EUROPEAN PATENT APPLICATION

(11) **EP 1 389 705 A1**
(43) Date of publication of application: **18.02.2004**
(21) Application number: 03014664.1
(22) Date of filing: 27.06.2003
(51) Int. Cl.: F16L 15/00

(54) **Pipe thread joint structure and pipe thread joint method**

(30) Priority: 16.08.2002 JP 2002237385
(71) Applicant: Metal One Corporation, Tokyo (DE)
(72) Inventor: Suzuki, Teruaki, Yokohama, Kanagawa (JP)
(74) Representative: Patentanwälte Westphal, Mussgnug & Partner

(57) **Abstract**

An economical thread joint structure is provided for preventing a turbulent flow of fluid passing through the inside. In the pipe thread joint structure, female threads (11, 12) are formed in the inner circumferential surface of a coupling (10) narrowed from both ends thereof toward the center thereof. Male threads (21, 31) fit to the female threads (11, 12) of the coupling (10) are formed at end portions of first and second pipes (20, 30) respectively. The first and second pipes (20, 30) are inserted to left and right sides of the coupling (10), and tightened up to and fitted into the coupling (10) respectively. The fitting distance of the first pipe (20) into the coupling (10) is made 0.050-0.150 inches longer than the fitting distance of the second pipe (30) into the coupling (10) when the outer diameter of the pipes is not larger than 9 inches. The former fitting distance is made 0.150-0.250 inches longer than the latter fitting distance when the outer diameter is larger than 9 inches.

## Description

### BACKGROUND OF THE INVENTION

The present invention relates to a joint structure and a joint method for pipes such as oil well pipes used for extracting fluid from oil wells, geothermal wells, gas wells, and the like.

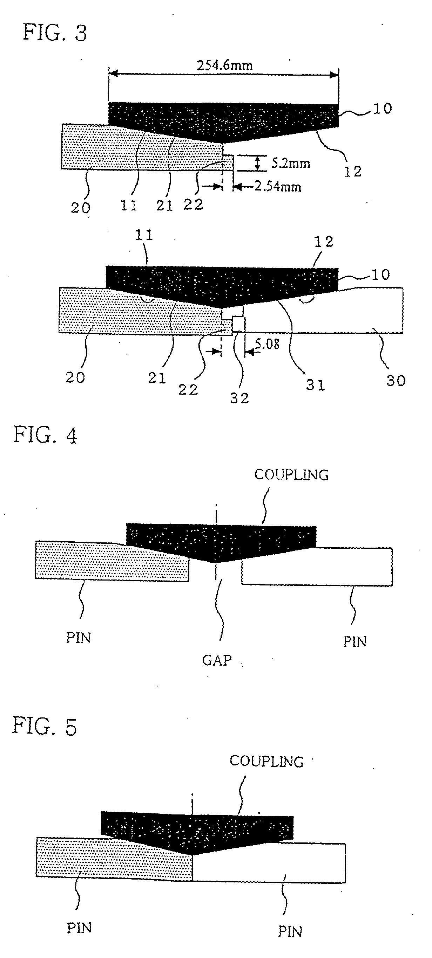

A plurality of oil well pipes connected with each other are laid down to a well. On such an occasion, a male thread called a pin (PIN) cut in the outer circumferential surface of an end portion of a pipe about 10 m long is combined with a female thread (BOX) cut in a joint called a coupling. In such a manner, the oil well pipes are connected with each other. Normally, pins and couplings conforming to API (American Petroleum Institute) are used for this connection. However, when oil well pipes are normally connected using such a coupling, there may occur a gap between the pins inside the coupling as shown in Fig. 4. Thus, the inner surface of the connected pipes becomes not smooth, so that a turbulent flow is produced in oil or gas flowing on the inner surface to thereby cause corrosion.

As one of countermeasures against this problem, there is a method using an expensive special thread called a premium connection.

On the other hand, instead of such an expensive special thread, there is also adopted a system called "butt coupling" in which the length of a coupling is cut back so that pins in the left and the right abut against each other at the center of the coupling, as shown in Fig. 5.

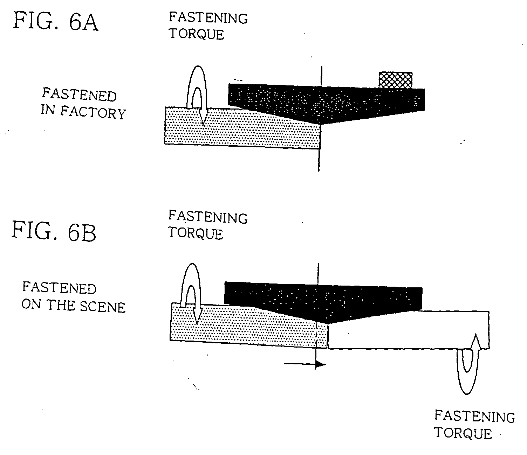

In the case of the butt coupling system in the related art, as shown in Fig. 6A, one pipe tightened up to and fitted into a coupling at a factory is shipped, and the other pipe is tightened up to and fitted into the coupling at a scene of a well or the like. In the coupling system in the related art, however, the fitting distance of one pin fitted into a coupling at the factory is set to be equal to the fitting distance of another pin fitted into the coupling at the scene. Accordingly, a tightening force to tighten up one pin to a coupling at the factory may be weaker than a tightening force to tighten up another pin to the coupling at the scene. On that occasion, when the pin is tightened up at the scene, as shown in Fig. 6B, the coupling tightened up to a pin at the factory is rotated together (this is called corotation) so that the pin tightened up the factory gets over the center of the coupling and projects to the other pin side so as to interfere therewith. Then, once corotation occurs, the position of the pin fitted into the coupling at the factory cannot be controlled. Thus, the tightening force of the pin tightened up at the scene becomes insufficient so that it is feared that oil or gas passing through the inside of the pipes leaks to the outside through the thread portion.

In addition, in the case of the butt coupling system in the related art, no rule in API standard is provided about the butting end wall thickness of a bevel portion at the butting end of a pin. Therefore, when pins of pipes are made to abut against each other, it is feared that the butting ends at the extreme tips of the pins are so thin that the butting end of the pins may be deformed greatly due to the torque at the time of tightening up.

### SUMMARY OF THE INVENTION

It is an object of the present invention to develop a novel butt coupling system to solve the foregoing problems belonging to a butt coupling system in the related art, and to provide an economical pipe thread joint structure and an economical pipe thread joint method in which a thread conforming to API standard or a thread obtained by modifying a part of the thread conforming to API standard is used in place of an expensive special screw, whereby occurrence of a turbulent flow can be suppressed and the sealing performance proper to the thread can be kept.
(1) According to the invention, there is provided a pipe thread joint structure in which first and second pipes having male threads fitted to female threads of a coupling are tightened up to left and right sides of the coupling so as to be fitted into the coupling respectively, the female threads being formed in an inner circumferential surface of the coupling which surface is narrowed from both ends thereof toward a central portion thereof, the male threads being formed at end portions of the first and second pipes respectively; wherein a fitting distance of the first pipe into the coupling is made longer than a fitting distance of the second pipe into the coupling.
(2) The fitting distance of the first pipe is fitted into the coupling is made 0.050-0.150 inches longer than the fitting distance of the second pipe into the coupling when each of the pipes has an outer diameter not smaller than 9 inches, and the fitting distance of the first pipe into the coupling is made 0.150-0.250 inches longer than the fitting distance of the second pipe into the coupling when each of the pipes has an outer diameter larger than 9 inches.
(3) The female threads are formed symmetrically in left and right sides of the coupling, protrusion portions for defining a difference between the respective fitting distances of the first and second pipes into the coupling are formed at front edges of male thread portions of the first and second pipes respectively, the first pipe is tightened up to one of the left and right sides of the coupling so as to allow the front edge of the male thread portion to reach a central position of the coupling and is fitted into the coupling with the protrusion portion of the first pipe protruding toward the other side of the coupling, and the second pipe is tightened up to other side of the coupling so as to be fitted into the coupling with the protrusion portion of the second pipe abutting against the protrusion portion of the first pipe.
(4) According to the invention, there is provided a pipe thread joint method in which first and second pipes having male threads fitted to female threads of a coupling are inserted into left and right ends of the coupling and tightened up so as to be fitted into the coupling respectively, the female threads being formed in an inner circumferential surface of the coupling which surface is narrowed from both ends thereof toward a central portion thereof, the male threads being formed at end portions of the first and second pipes respectively, the pipe thread joint method including the steps of: tightening up the first pipe to one of left and right sides of the coupling so as to fit the first pipe into the coupling; and then tightening up the second pipe to the other side of the coupling so as to fit the second pipe into the coupling; wherein a fitting distance of the first pipe into the coupling is made 0.050-0.150 inches longer than a fitting distance of the second pipe into the coupling when each of the pipes has an outer diameter not smaller than 9 inches, and the fitting distance of the first pipe into the coupling is made 0.150-0.250 inches longer than the fitting distance of the second pipe into the coupling when each of the pipes has an outer diameter larger than 9 inches.
(5) The female threads are formed symmetrically in left and right sides of the coupling, and protrusion portions for defining a difference between the respective fitting distances of the first and second pipes into the coupling are formed at front edges of male threads of the first and second pipes respectively, the first pipe is tightened up to and fitted into one of the left and right sides of the coupling so as to allow the front edge of the male thread portion to reach a central position of the coupling and with the protrusion portion of the first pipe protruding toward the other side of the coupling, and the second pipe is tightened up to the other side of the coupling so as to be fitted into the coupling with the protrusion portion of the second pipe abutting against the protrusion portion of the first pipe.

### BRIEF DESCRIPTION OF THE DRAWINGS

Figs. 1A and 1B are process diagrams for obtaining a pipe thread joint structure according to an embodiment of the present invention;
Fig. 2 is a structure diagram showing an example of a protrusion portion formed in a front edge portion of a pipe;
Fig. 3 is a process diagram for obtaining a pipe thread joint structure according to Example of the present invention;
Fig. 4 is a structure diagram showing a pipe thread joint structure in the related art;
Fig. 5 is a structure diagram showing a pipe thread joint structure in the related art using a butt coupling system; and
Figs. 6A and 6B are explanatory views of problems belonging to the butt coupling system in the related art.

### DESCRIPTION OF THE EMBODIMENT

In order to prevent a turbulent flow from occurring in a pipe coupling portion as shown in the related art, it is necessary to take it into consideration to prevent corotation surely in the design of a thread joint for making the extreme tips of pipes abut against each other by use of a coupling. Otherwise, the corotation is apt to occur at the time of tightening at the scene.

To this end, according to the present invention, the fitting distance (or depth) of a pin fitted into a coupling in advance is made longer than that of another pin to be tightened up the coupling later at the scene. Thus, the tightening force of the pin tightened up in advance is made larger than the tightening force of the pin tightened up later at the scene or the like. As means for this arrangement, in the present invention, a male thread of a pipe tightened up at a factory or the like is tightened up to and fitted into a bilateraly symmetrical coupling so as to allow the front edge of the male thread to reach its central portion, so that a protrusion portion provided on the front edge of the male thread projects toward the opposite side area of the coupling. In such a manner, the fitting distance of the pipe fitted into the coupling at the scene is made shorter correspondingly to the projecting length of the protrusion portion. Thus, the tightening force of the pipe to be tightened at the scene is lowered.

According to experiments, corotation can be prevented by determining a difference d between the fitting distance at the factory and the fitting distance at a scene of a well or the like as follows.
(i) When the pipe outer diameter is not larger than 9 inches (about 228.6 mm):
   0.050 inches (about 1.27 mm)≤d≤0.150 inches (about 3.81 mm)
(ii) When the pipe outer diameter is larger than 9 inches (about 228.6 mm):
   0.150 inches (about 3.81 mm)≤d≤0.250 inches (about 6.35 mm)

In addition, the length of the coupling and the positions where the pipes are fitted into the coupling respectively are determined in consideration of manufacturing errors as follows. That is, fluid is prevented from leaking on the fitting side of a pipe tightened up with a smaller tightening force even in the combination of the smallest pin thread diameter and the largest coupling thread diameter estimated in consideration of the tolerance of the error. In addition, excessive stress is prevented from being applied to the coupling on the fitting side of a pipe tightened up with a larger tightening force even in the combination of the largest pin thread diameter and the smallest coupling thread diameter estimated likewise.

Further, an extreme tip of a pipe tightened up at the factory and an extreme tip of a pipe tightened up at the scene are made to abut against each other so that the fitting distance of the pipe to be tightened up later is defined. Therefore, the wall thickness at the protrusion portion of each pipe is secured to be thick enough to endure the torque generated when the pipe is tightened up. To this end, the outer diameter of the protrusion portion of each pipe may be made as large as possible, but the protrusion portion of the pipe has to have a shape capable of passing through the narrowest center portion of the coupling. It is therefore preferable that the outer diameter of the protrusion portion of each pipe is a little smaller than the thread root diameter at the front edge of the male thread, for example, 0.5 mm smaller than the thread root diameter at the front edge of the male thread. Thus, the wall thickness of the protrusion portion of the pipe can be kept maximal.

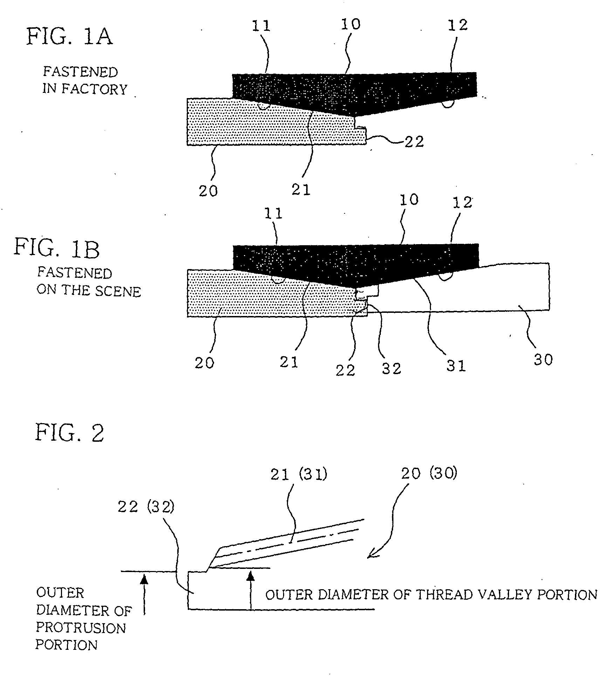

Figs. 1A and 1B are process diagrams for obtaining a pipe thread joint structure according to an embodiment of the present invention. In Figs. 1A and 1B, the reference numeral 10 represents a coupling in which female threads 11 and 12 are formed in the inner circumferential surface narrowed from both ends thereof toward the central portion thereof; 20, a first pipe having a male thread 21 in an end portion thereof, which male thread 21 is fitted to the female threads 11 and 12 of the coupling 10; and 30, a second pipe having a male thread 31 in an end portion thereof, which male thread 31 is fit to the female threads 11 and 12 of the coupling 10.

Incidentally, it is desired that the female threads of the coupling 10 are formed symmetrically with respect to the center line of the coupling 10, so that it is not necessary to use the right or left side of the coupling distinctively in accordance with circumstances. In addition, it is desired that the first and second pipes 20 and 30 are formed to have one and the same shape including their pin portions (the male thread portion 21 with a protrusion portion 22, and the male thread portion 31 with a protrusion portion 32) so that they can be used without distinction.

The specifications of the male threads 21 and 31 formed in the end portions of the first pipe 20 and the second pipe 30 conform to the specifications of a pin (thread) according to API standard. Further, protrusion portions 22 and 32 which will be made to abut against each other when the pipes 20 and 30 are connected are formed at the front edges of the male threads 21 and 31 of the pipes 20 and 30 respectively in this embodiment.

In the state where the extreme tips of the protrusion portions 22 and 32 are made to abut against each other, the total length of the protrusion portions 22 and 32 in the axial direction of the pipes corresponds to the difference between the fitting distances of the pipes 20 and 30 fitted into the coupling.

Fig. 2 is a structure diagram showing an example of the protrusion portion 22 (32) formed at the front edge of the male thread 21 (31) of each pipe. As shown in Fig. 2, the outer diameter of the protrusion portion 22 (32) is made a little smaller than the thread root diameter at the front edge of the male thread 21 (31) constituting the pin of the pipe. By this structure, when the pin portion is inserted in and tightened up to the coupling, the protrusion portion 22 (32) can pass through the narrowest portion in the center of the coupling. In addition, when the protrusion portions 22 and 32 are made to abut against each other by tightening and fitting, the protrusion portions 22 and 32 can be prevented from being deformed by the tightening torque.

The pipe thread joint structure according to this embodiment of the present invention is formed by connecting the first pipe 20 and the second pipe 30 by use of the coupling 10 in the following steps.

### (Step 1; Fig. 1A)

At a factory or the like, the first pipe 20 is tightened up to and fitted into one of the left and right female threads of the coupling 10, for example, to the female thread 11. At that time, the male thread 21 of the first pipe 20 is tightened up to and fitted into the coupling 10 so as to allow the front edge of the male thread to reach the central portion of the coupling. As a result, the protrusion portion 22 of the first pipe 20 is located to protrude toward the other side of the coupling 10.

### (Step 2; Fig. 1B)

At a scene of an oil well or the like, the second pipe 30 is tightened up to and fitted into the other side (for example, the female thread 12) of the coupling 10 to which the first pipe 20 has been attached in the aforementioned Step 1. At that time, the second pipe 30 is tightened up to and fitted into the other side female thread 12 of the coupling 10 so that the extreme tip of the protrusion portion 32 of the second pipe 30 is made to abut against the extreme tip of the protrusion portion 22 of the first pipe 20.

### [Example]

Next, a thread joint method and a screw joint structure according to Example of the present invention will be shown. Fig. 3 is a process diagram for obtaining a pipe screw joint structure according to Example of the invention. Incidentally, the following pipes and coupling are used here.

The first and second pipes 20 and 30 to be connected measure 9 and 5/8 inches (about 244.47 mm) in outer diameter and 0.352 inches (about 8.94 mm) in wall thickness.

As the pin portions of the pipes, the male threads 21 and 31 have the same specifications as that of a buttress thread conforming to API standard, and the protrusion portions 22 and 32 are provided at the front edges of the threads so as to adjust the fitting distances of the first and second pipes 20 and 30 respectively. Incidentally, the two protrusion portions 22 and 32 have one and the same shape. In addition, when the outer diameter of each pipe to be connected is larger than 9 inches here, the total length of the protrusion portions in the axial direction of the pipes is set to be in a range of from 0.150 inches (about 3.81 mm) to 0.250 inches (6.35 mm). In this Example, the protrusion portions 22 and 32 each 0.100 inch (about 2.54 mm) long are formed at the front edges of the male threads 21 and 31 respectively.

As for the wall thickness of the protrusion portions, the outer diameter of each protrusion portion 22, 32 is made about 0.5 mm smaller than the thread root diameter at front edge of the male thread 21, 31, and the wall thickness of the protrusion portion 22, 32 is set at about 5.2 mm.

The length of the coupling is made 10.025 inches (about 254.63 mm) in this Example while the length of a coupling conforming to API standard is 10.625 inches (about 269.87 mm).

The pin portion of the first pipe 20 is inserted by hand to the coupling 10 from its one side and tightened up to and fitted into the female thread 11 of the coupling 10 so as to allow the front edge of the male thread 21 of the first pipe 20 to reach the central position of the coupling 10. Accordingly, the protrusion portion 22 of the first pipe 20 protrudes toward the other side of the coupling 10, in this case, toward the side where the female thread 12 is formed. Incidentally, a screwed fitting distance of the pipe into the coupling accompanied by tightening up by screwing the male thread 21 into the female thread 11 is about 17.8 mm between a position at the front edge of the male thread 21 inserted into the coupling by hand and the central position of the coupling 10.

The pin portion of the second pipe 30 is inserted by hand in the coupling 10 from the other side, and the male thread 31 of the second pipe 30 is tightened up by screwing to and fitted into the female thread 12 of the coupling 10 from the position of the pipe inserted by hand in the coupling 10 to the position where the extreme tip of the protrusion portion 32 of the second pipe 30 abuts against the extreme tip of the protrusion portion 22 of the first pipe 20. Accordingly, the screwed fitting distance of the male thread 31 into the female thread 12 is shorter than the screwed fitting distance of the male thread 21 into the female thread 11, by the total length 0.200 inches (about 5.08 mm) of the protrusion portions 22 and 32 in the axial direction of the pipes.

The tolerance of the pitch diameter of a buttress thread according to API standard is ±0.003 inches in each of a pin and a coupling. The tightening torque is 10,900 ft·1bs, when the first pipe 20 is tightened up to be fitted into the coupling 10 so as to allow the front edge of the male thread 21 to reach the center of the coupling 10, in the loosest combination (the smallest diameter of the pin and the largest diameter of the coupling). The tightening torque becomes 10,600 ft·lbs when the second pipe 30 is tightened up to the coupling 10 from the other end so as to allow the extreme tips of the both protrusion portions 22 and 23 to abut against each other becomes 10,600 ft·lbs, in the tightest combination (the largest diameter of the pin and the smallest diameter of the coupling). Accordingly, the second pipe 30 can be tightened up without corotation. In addition, the wall thickness 5.2 mm of each protrusion portion 22, 32 at the front edge of the male thread can endure the tightening toque sufficiently.

Next, the performance of the screw joint structure according to the aforementioned Example will be examined.

The sealing conditions are the worst when the second pipe 30 is tightened up in the loosest combination (the smallest diameter of the pin and the largest diameter of the coupling). However, the contact surface pressure generated in the fitting portion of the thread on this occasion becomes 22.7 Mpa, which is high enough to prevent fluid passing through the inside from leaking.

In addition, the circumferential "hoop stress" generated in the coupling 10 at the time of tightening up the pipe and the coupling is the highest when the first pipe 20 is tightened up in the tightest combination (the largest diameter of the pin and the smallest diameter of the coupling). However, the hoop stress at this time becomes 390.0 MPa, which is not excessive stress to break the coupling 10.

According to the structure or the method of the present invention, it is possible without using an expensive thread joint to attain an economical pipe thread joint which can suppress occurrence of a turbulent flow and keep the sealing performance proper to the thread, by modifying a part of a thread joint conforming to API standard.

## Claims

1. A pipe thread joint structure comprising: a coupling (10) having an inner circumferential surface, which is narrowed from both ends thereof toward a central portion thereof and has female threads (11, 12) thereon; and first and second pipes (20, 30) having male threads (21, 31) at their end portion to be fitted to the female threads (11, 12) of the coupling (10), said first and second pipes being tightened up to and fitted into the left and right sides of said coupling (10) respectively,
wherein a fitting distance of said first pipe (20) into said coupling (10) is made longer than a fitting distance said second pipe (30) into said coupling (10).

2. A pipe thread joint structure according to Claim 1, wherein said fitting distance of said first pipe (20) into said coupling (10) is made 0.050-0.150 inches longer than said fitting distance of said second pipe (30) into said coupling (10) when each of said pipes (20, 30) has an outer diameter not larger than 9 inches, and said fitting distance of said first pipe (20) into said coupling (10) is made 0.150-0.250 inches longer than said fitting distance of said second pipe (30) into said coupling (10) when each of said pipes (20, 30) has an outer diameter larger than 9 inches.

3. A pipe thread joint structure according to Claim 1 or 2, wherein:
said female threads (11, 12) are formed symmetrically in left and right sides of said coupling (10), and protrusion portions (22, 32) for defining a difference between said fitting distances of said first and second pipes (20, 30) into said coupling (10) respectively are formed at front edges of male threads (21, 31) of said first and second pipes (20, 30) respectively;
said male thread (21) of the first pipe (20) is tightened up to one of said left and right sides of said coupling (10), and fitted into said coupling (10) so as to allow the front edge of said male thread to reach the central position of said coupling (10) with said protrusion portion (22) of said first pipe (20) protruding toward the other side of said coupling (10);
and
said male thread (31) of the second pipe (30) is tightened up to the other side of said coupling (10) and fitted into said coupling (10) with the extreme tip of said protrusion portion (32) of said second pipe (30) abutting against the extreme tip of said protrusion portion (22) of said first pipe (20).

4. A pipe joint method in which a coupling (10) having an inner circumferential surface, which is narrowed from both ends thereof toward a central portion thereof and has female threads (11, 12) thereon, and first and second pipes (20, 30) having male threads (21, 31) at their end portions to be fitted to the female threads (11, 12) of the coupling (10) are prepared, and the first and second pipes are inserted into and tightened up to left and right ends of said coupling (10) so as to be fitted into said coupling (10) respectively, said pipe thread joint method comprising the steps of:
tightening up said male thread (21) of the first pipe (20) to one of left and right sides of said coupling (10) so as to fit said first pipe (20) into said coupling (10); and
then tightening up said male thread (31) of the second pipe (30) to the other side of said coupling (10) so as to fit said second pipe (30) into said coupling (10);
wherein a fitting distance of said first pipe (20) into said coupling (10) is made 0.050-0.150 inches longer than a fitting distance of said second pipe (30) into said coupling (10) when each of said pipes (20, 30) has an outer diameter not larger than 9 inches, and said fitting distance of said first pipe (20) into said coupling (10) is made 0.150-0.250 inches longer than said fitting distance of said second pipe (30) into said coupling (10) when each of said pipes (20, 30) has an outer diameter larger than 9 inches.

5. A pipe thread joint method according to Claim 4, wherein:
said female threads (11, 12) are formed symmetrically in left and right sides of said coupling (10), and protrusion portions (22, 32) for defining a difference between said fitting distances of said first and second pipes (20, 30) into said coupling (10) respectively are formed at front edges of male thread portions (21, 31) of said first and second pipes (20, 30) respectively;
said male thread (21) of the first pipe (20) is tightened up to one of said left and right sides of said coupling (10) and fitted into said coupling (10) so as to allow the front edge of said male thread (21) to reach the central position of said coupling (10) with said protrusion portion (22) of said first pipe (20) protruding toward the other side of said coupling (10); and
said male thread (31) of the second pipe (30) is tightened up to the other side of said coupling (10) and fitted into said coupling with the extreme tip of said protrusion portion (32) of said second pipe (30) abutting against the extreme tip of said protrusion portion (22) of said first pipe (20).
